# EUROPEAN PATENT APPLICATION

(11) **EP 4 664 844 A1**
(43) Date of publication of application: **17.12.2025**
(21) Application number: 24753397.9
(22) Date of filing: 07.02.2024
(51) Int. Cl.: H04L 41/40, H04L 41/122, H04L 41/0895

(54) **INFORMATION PROCESSING DEVICE, INFORMATION PROCESSING METHOD, AND INFORMATION PROCESSING PROGRAM**

(30) Priority: 09.02.2023 JP 2023018471
(71) Applicant: Yokogawa Electric Corporation, Tokyo 180-8750 (JP)
(72) Inventor: YAJIMA, Hideharu, Musashino-shi, Tokyo 180-8750 (JP)
(74) Representative: Winter, Brandl - Partnerschaft mbB
(86) International application number: PCT/JP2024/004174
(87) International publication number: WO 2024/166954

(57) **Abstract**

A configurator 10 stores definition information in which respective equipment is associated with information on a virtual network used by the respective equipment, detects, via a first virtual network, that equipment is connected to an L2 switch 30 connected to the configurator 10 by using the first virtual network, specifies a second virtual network used by the equipment based on the definition information, and assigns the second virtual network to a connection port of the L2 switch 30 to which the equipment is connected.

## Description

### Field

The present invention relates to an information processing apparatus, an information processing method, and an information processing program.

### Background

There is a known technique for virtually grouping a plurality of external devices by a network switch based on a virtual local area network (VLAN) number.

### Citation List

### Patent Literature

Patent Literature 1: JP 5206609 B1

### Summary

### Technical Problem

However, in the above technology, it is difficult to effectively establish a network. For example, in the above technology, after a network line is physically connected to an arbitrary connection port, it is difficult to enable communication between a plurality of external devices virtually grouped without replacing the connection of the connection port of the network line.

The present invention has been made in view of the above, and an object thereof is to effectively establish a network.

### Solution to Problem

The present invention provides an information processing apparatus including a storage unit that stores definition information in which respective equipment is associated with information on a virtual network used by the respective equipment, a detection unit that detects, via a first virtual network, that equipment is connected to a network device connected to the information processing apparatus by using the first virtual network, and a setting unit that specifies a second virtual network used by the equipment based on the definition information and assigns the second virtual network to a connection port of the network device to which the equipment is connected.

Moreover, the present invention provides an information processing method that an information processing apparatus executes a process including detecting, via a first virtual network, that equipment is connected to a network device connected to the information processing apparatus by using the first virtual network, specifying a second virtual network used by the equipment connected to the network device based on definition information in which respective equipment is associated with information on a virtual network used by the respective equipment, and assigning the second virtual network to a connection port of the network device to which the equipment is connected.

Moreover, the present invention provides an information processing program configured to cause an information processing apparatus to execute a process including detecting, via a first virtual network, that equipment is connected to a network device connected to the information processing apparatus by using the first virtual network, specifying a second virtual network used by the equipment connected to the network device based on definition information in which respective equipment is associated with information on a virtual network used by the respective equipment, and assigning the second virtual network to a connection port of the network device to which the equipment is connected.

### Advantageous Effects of Invention

According to the present invention, there is an effect that a network can be effectively established.

### Brief Description of Drawings

FIG. 1 is a diagram illustrating a configuration example of an information processing system according to an embodiment.
FIG. 2 is a block diagram illustrating a configuration example of a configurator according to the embodiment.
FIG. 3 is a diagram illustrating an example of a definition data storage unit according to the embodiment.
FIG. 4 is a diagram illustrating an example of a field network setting process without a VLAN.
FIG. 5 is a diagram illustrating an example of a field network setting process 1 according to the embodiment.
FIG. 6 is a diagram illustrating an example of a field network setting process 2 according to the embodiment.
FIG. 7 is a diagram illustrating an example of a field network setting process 3 according to the embodiment.
FIG. 8 is a diagram illustrating an example of a field network setting process 4 according to the embodiment.
FIG. 9 is a diagram illustrating an example of a field network setting process 5 according to the embodiment.
FIG. 10 is a flowchart illustrating an example of a field network establishment process according to the embodiment.
FIG. 11 is a flowchart illustrating an example of a VLAN setting process according to the embodiment.
FIG. 12 is a diagram illustrating a hardware configuration example according to the embodiment.

### Description of Embodiments

Hereinafter, an information processing apparatus, an information processing method, and an information processing program according to an embodiment of the present invention will be described in detail with reference to the drawings. Note that the present invention is not limited to the embodiment described below.

### [Embodiment]

Hereinafter, a configuration and a process of an information processing system 100, a configuration and a process of each device of the information processing system 100, a specific example of a setting process of a configurator 10, and a flow of the process in the information processing system 100 according to the embodiment will be sequentially described, and effects of the embodiment will be described at the end.

### [1. Configuration and process of information processing system 100]

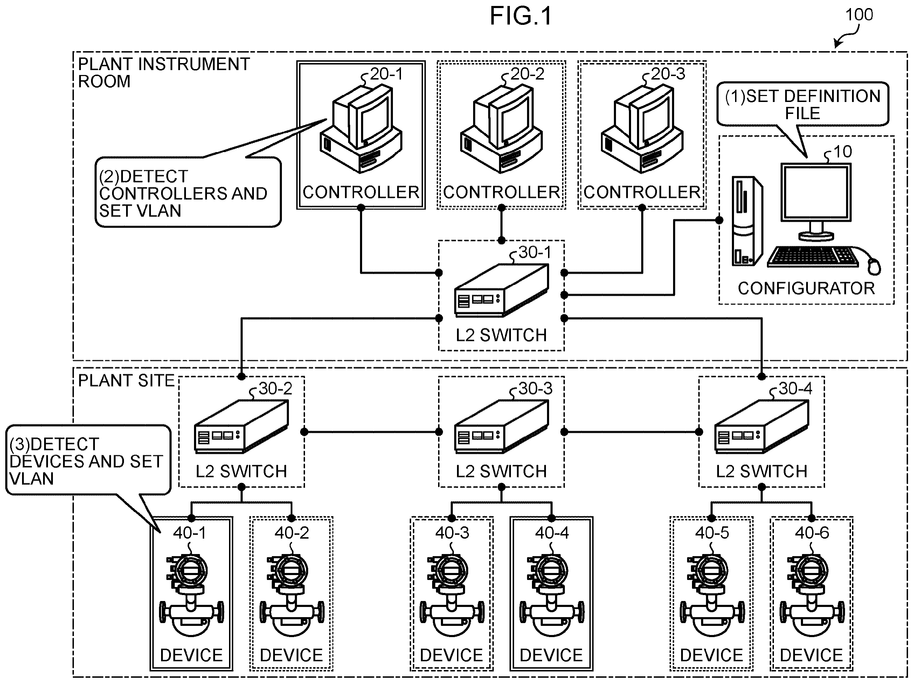

A configuration of the information processing system 100 according to the embodiment will be described in detail with reference to FIG. 1. FIG. 1 is a diagram illustrating a configuration example of the information processing system 100 according to the embodiment. Hereinafter, the configuration example of the entire information processing system 100, a process example of the information processing system 100, and problems of the information processing system of the reference technique will be sequentially described, and effects of the information processing system 100 will be described at the end. According to the embodiment, factory production remote monitoring in a plant will be described as an example, but the application field is not limited, and the present invention can also be applied to environmental measurement remote monitoring such as power monitoring, wind power generation, water supply and sewerage monitoring, and river monitoring.

### (1-1. Configuration example of entire information processing system 100)

The information processing system 100 includes the configurator 10 that is an information processing apparatus, controllers 20 (20-1, 20-2, 20-3) that are control devices, L2 switches 30 (30-1, 30-2, 30-3, 30-4) that are network devices, and devices 40 (40-1, 40-2, 40-3, 40-4, 40-5, 40-6) such as a field device. Here, the configurator 10 and the controllers 20 are installed in a plant instrument room (referred to as an "instrument room" as appropriate) that manages the plant. Further, the devices 40 are installed at a plant site (referred to as a "site" as appropriate). The L2 switch 30-1 installed in the plant instrument room is connected to the configurator 10 and the controllers 20 (20-1, 20-2, 20-3). The L2 switch 30-2 installed at the plant site is connected to the device 40-1 and the device 40-2. The L2 switch 30-3 installed at the plant site is connected to the device 40-3 and the device 40-4. Further, the L2 switch 30-4 installed at the plant site is connected to the device 40-5 and the device 40-6. At this time, the L2 switches 30 (30-1, 30-2, 30-3, 30-4) are annularly connected. Note that the information processing system 100 illustrated in FIG. 1 may include a plurality of configurators 10.

### (1-2. Process example of entire information processing system 100)

A process example of the entire information processing system 100 as described above will be described. Note that the following process can be executed in a different order. In addition, some steps in the following process may be omitted.

### (1-2-1. Definition file setting process)

The configurator 10 sets a definition file including definition information (see FIG. 1 (1)). For example, the configurator 10 receives and stores an input of the definition file by an operation of a plant manager such as a system integrator. The configurator 10 may receive the definition file from a device or a database (not illustrated).

Here, the definition information is information in which identification information of the controllers 20 and the devices 40 that are connection devices (referred to as "equipment" as appropriate) connected to the L2 switches 30 that are network devices is respectively associated with identification information of network segments of the respective controllers 20 and devices 40. For example, the definition information is a combination of identification numbers of the controllers 20 and the devices 40 and VLAN identification numbers for grouping the respective controllers 20 and devices 40.

### (1-2-2. Controller VLAN setting process)

The configurator 10 sets VLANs of the controllers 20 (see FIG. 1 (2)). First, the configurator 10 searches for the controllers 20 and detects the controllers 20 on the network. For example, the configurator 10 searches for a network via the L2 switch 30-1, and detects the controller 20-1, the controller 20-2, and the controller 20-3 connected to the L2 switch 30-1. At this time, the configurator 10 detects the controllers 20 by an initially-set VLAN (for example, VLAN_ID = 1) set when the network is physically connected.

Secondly, the configurator 10 changes the detected VLAN of the controllers 20. For example, the configurator 10 changes the VLANs to a defined VLAN of the controller 20-1 (for example, VLAN_ID = 10), a defined VLAN of the controller 20-2 (for example, VLAN_ID = 20), and a defined VLAN of the controller 20-3 (for example, VLAN_ID = 30), respectively, according to the stored definition file.

### (1-2-3. Device VLAN setting process)

The configurator 10 sets VLANs of the devices 40 (see FIG. 1 (3)). First, the configurator 10 searches for the devices 40 and detects the devices 40 on the network. For example, the configurator 10 searches the network via the L2 switch 30-2, and detects the device 40-1 and the device 40-2 connected to the L2 switch 30-2. The configurator 10 also searches the network via the L2 switch 30-3, and detects the device 40-3 and the device 40-4 connected to the L2 switch 30-3. In addition, the configurator 10 searches the network via the L2 switch 30-4, and detects the device 40-5 and the device 40-6 connected to the L2 switch 30-4. At this time, the configurator 10 detects the devices 40 by an initial VLAN (for example, VLAN_ID = 1) set when the network is physically connected.

Secondly, the configurator 10 changes the VLANs of the detected devices 40. For example, the configurator 10 changes the VLANs to a defined VLAN of the device 40-1 (for example, VLAN_ID = 10), a defined VLAN of the device 40-2 (for example, VLAN_ID = 20), a defined VLAN of the device 40-3 (for example, VLAN_ID = 30), a defined VLAN of the device 40-4 (for example, VLAN_ID = 10), a defined VLAN of the device 40-5 (for example, VLAN_ID = 20), and a defined VLAN of the device 40-6 (for example, VLAN_ID = 30), respectively, according to the stored definition files.

### (1-3. Effects of information processing system 100)

Hereinafter, the background of the field network, the outline and problems of the reference technique described in Patent Literature 1 will be described, and then effects of the information processing system 100 will be described.

### (1-3-1. Background of field network)

In a field network which is a network built at a plant site, control devices and field devices can be used by being physically and logically connected. Here, there are many field devices in the plant, and it is needed to separately connect network segments for system management. In addition, the role of installing the field devices and the role of building an instrumentation system are often different in terms of tasks, and the work is performed according to instructions agreed in advance by both parties. Therefore, in a case where the field devices are installed and connected to the network, if the field devices are physically connected to wrong network segments, the system building side cannot recognize the field devices from the control devices, and a temporal loss of plant start-up work occurs.

### (1-3-2. Outline of reference technique)

In the information processing system of the reference technique, the following information processing is executed. First, a network switch receives an IP address from an external device such as a connected control device or field device. Secondly, the network switch sets a VLAN number based on the received IP address of the external device. As described above, the information processing system of the reference technique is a technique for virtually grouping a plurality of external devices based on the VLAN numbers.

### (1-3-3. Problems in information processing of reference technique)

As in the reference technique described above, the technique of virtually grouping external devices such as control devices and field devices using a network switch has following problems. In a case where one side of a network line whose other side is connected to a control device or a field device is connected to a connection port of the network switch, it is difficult to enable communication between the virtually grouped control device and the field device without replacing the connection of the connection port of the network line even when being physically connected to any connection port, that is, even when the network line is physically connected to any connection port. In other words, in a case where a connection error of the network line occurs or in a case where it is desired to change the grouping, it is needed to change the connection of the connection ports of the network line, which leads to an increase in field work and an increase in man-hours.

### (1-3-4. Outline of information processing system 100)

In the information processing system 100, the configurator 10 stores the definition file including the VLAN identification numbers respectively associated with the controllers 20 and the devices 40 connected to the L2 switches 30, detects the controllers 20 and the devices 40 via the L2 switches 30 set to the initial VLAN, and sets each of the controllers 20 and devices 40 to the VLAN corresponding to the VLAN identification number indicated by the definition file when the controllers 20 and the devices 40 are detected.

### (1-3-5. Effects of information processing system 100)

In the information processing system 100, once the network line is physically connected to any connection port of the network switch without considering connection to the connection port of the network switch in consideration of the network segment, it is possible to enable communication between the virtually grouped control devices and field devices without performing physical connection replacement of the connection port of the network line thereafter, so that the field work and man-hours can be reduced.

### [2. Configuration and process of each device in information processing system 100]

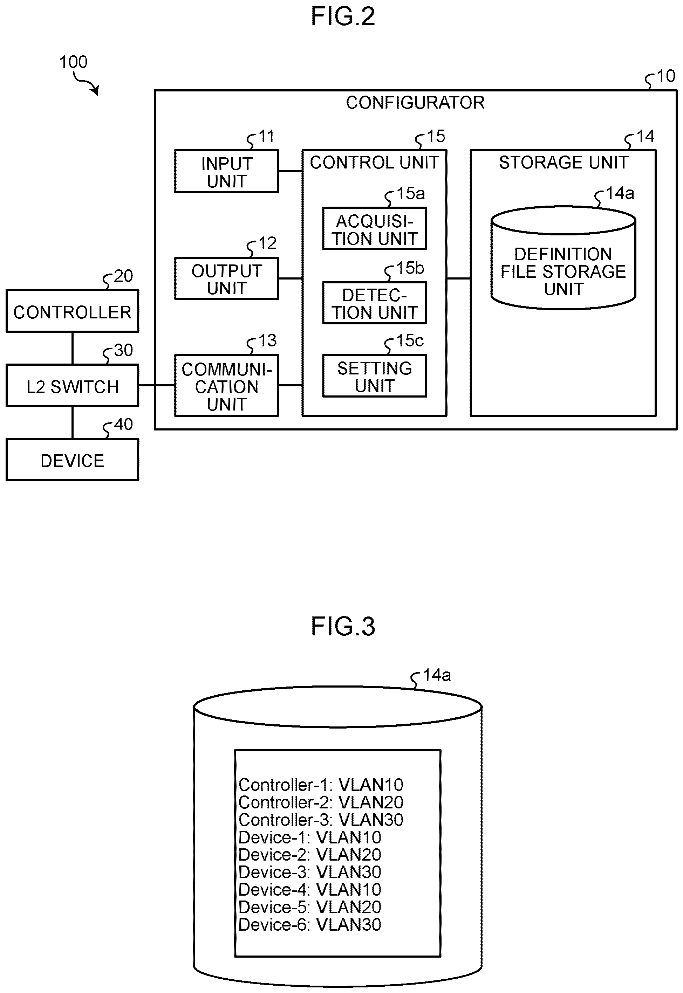

A functional configuration of each device such as the configurator 10 included in the information processing system 100 illustrated in FIG. 1 will be described with reference to FIG. 2. FIG. 2 is a block diagram illustrating a configuration example of each device in the information processing system 100 according to the embodiment. Hereinafter, the configuration example of the entire information processing system 100 according to the embodiment is firstly described, and then a configuration example and a process example of the configurator 10, a configuration example and a process example of the controller 20, a configuration example and a process example of the L2 switch 30, and a configuration example and a process example of the device 40 will be described in detail.

### (2-1. Configuration example of entire information processing system 100)

A configuration example of the entire information processing system 100 illustrated in FIG. 1 will be described with reference to FIG. 2. As illustrated in FIG. 2, the information processing system 100 includes the configurator 10, the controller 20, the L2 switch 30, and the device 40. The configurator 10 is communicably connected to the controller 20, the L2 switch 30, and the device 40 through a predetermined communication network.

### (2-2. Configuration example and process example of configurator 10)

A configuration example and a process example of the configurator 10 which is an information processing apparatus will be described with reference to FIG. 2. The configurator 10 includes an input unit 11, an output unit 12, a communication unit 13, a storage unit 14, and a control unit 15.

### (2-2-1. Input unit 11)

The input unit 11 is for inputting various types of information to the configurator 10. For example, the input unit 11 is a mouse, a keyboard, or the like, and receives an input of setting information or the like to the configurator 10.

### (2-2-2. Output unit 12)

The output unit 12 outputs various types of information from the configurator 10. For example, the output unit 12 is a display or the like, and displays the setting information and the like stored in the configurator 10.

### (2-2-3. Communication unit 13)

The communication unit 13 manages data communication with other devices. For example, the communication unit 13 performs data communication with each communication device via a router or the like. Furthermore, the communication unit 13 can perform data communication with a terminal of an operator (not illustrated).

### (2-2-4. Storage unit 14)

The storage unit 14 stores various types of information that is referred to when the control unit 15 operates and various types of information that is acquired when the control unit 15 operates. The storage unit 14 includes a definition file storage unit 14a. Here, the storage unit 14 can be, for example, a semiconductor memory element such as a random access memory (RAM) or a flash memory, a storage device such as a hard disk or an optical disk, or the like. In the example of FIG. 2, the storage unit 14 is installed inside the configurator 10, but may be installed outside the configurator 10, or a plurality of storage units may be installed.

### (2-2-4-1. Definition file storage unit 14a)

The definition file storage unit 14a stores the definition file including definition information input by an operation by a plant manager such as a system integrator. The definition file storage unit 14a stores definition information in which each device is associated with information on a virtual network (VLAN) used by each device. At this time, the definition file storage unit 14a stores definition information in which information regarding a virtual network used by each device including the controller 20 as a control device and the device 40 such as a field device is associated. In addition, the definition file storage unit 14a stores, as the definition information, an identification number of a virtual network for identifying a network segment to which the controller 20 and the device 40 controlled by the controller 20 are allocated.

Here, an example of information stored in the definition file storage unit 14a will be described with reference to FIG. 3. FIG. 3 is a diagram illustrating an example of the definition file storage unit 14a of the configurator 10 according to the embodiment. In the example of FIG. 3, the definition file storage unit 14a stores text data as the definition information, but the format of the definition information is not limited.

In other words, FIG. 3 illustrates an example in which a VLAN identification number of the controller 20-1 that is a control device identified by "Controller-1" is "VLAN10", a VLAN identification number of the controller 20-2 that is a control device identified by "Controller-2" is "VLAN20", a VLAN identification number of the controller 20-3 that is a control device identified by "Controller-3" is "VLAN30", a VLAN identification number of the device 40-1 that is a device identified by "Device-1" is "VLAN10", a VLAN identification number of the device 40-2 that is a device identified by "Device-2" is "VLAN20", a VLAN identification number of the device 40-3 that is a device identified by "Device-3" is "VLAN30", and a VLAN identification number of the device 40-4 that is a device identified by "Device-4" is "VLAN10", a VLAN identification number of the device 40-5 that is a device identified by "Device-5" is "VLAN20", and a VLAN identification number of the device 40-6 that is a device identified by "Device-6" is "VLAN30".

### (2-2-5. Control unit 15)

The control unit 15 controls the entire configurator 10. The control unit 15 includes an acquisition unit 15a, a detection unit 15b, and a setting unit 15c. Here, the control unit 15 is, for example, an electronic circuit such as a central processing unit (CPU) and a micro processing unit (MPU), or an integrated circuit such as an application specific integrated circuit (ASIC) or a field programmable gate array (FPGA).

### (2-2-5-1. Acquisition unit 15a)

The acquisition unit 15a acquires various types of information. For example, the acquisition unit 15a acquires definition information that is input by an operation by the plant manager via the input unit 11 and that associates each device with information regarding a virtual network (VLAN) used by each device. The acquisition unit 15a stores the acquired definition information in the definition file storage unit 14a.

Here, the "equipment" is an external device other than a network device (for example, an L2 switch), and is a field device that is a device connected to the network device, a control device that is a controller, or the like.

Describing a specific example, the acquisition unit 15a acquires definition information of a network segment 1 {VLAN identification number: "VLAN10", control device: "Controller-1", field device 1: "Device-1", field device 2: "Device-4",...}, definition information of a network segment 2 {VLAN identification number: "VLAN20", control device: "Controller-2", field device 1: "Device-2", field device 2: "Device-5",...}, definition information of a network segment 3 {VLAN identification number: "VLAN30", control device: "Controller-3", field device 1: "Device-3", field device 2: "Device-6",...},....

### (2-2-5-2. Detection unit 15b)

The detection unit 15b detects each device including the controllers 20, the devices 40, or the like connected to the network device. For example, the detection unit 15b detects, via a first virtual network, that a device is connected to the L2 switch 30 that is a network device connected to the configurator 10 that is an information processing apparatus, using the first virtual network. At this time, the detection unit 15b detects at least one of the configurator 10 and the device 40 using the first virtual network set as the virtual network in the initial state.

Describing a specific example, the detection unit 15b detects the "Controller-1" that is the controller 20-1, the "Controller-2" that is the controller 20-2, and the "Controller-3" that is the controller 20-3 connected to the "L2SW-1" that is the L2 switch 30-1 via the L2 switch 30 (30-1, 30-2, 30-3, 30-4) set to the VLAN identification number "VLAN1" that identifies the first virtual network in the initial state. Similarly, the detection unit 15b detects "Device-1" that is the device 40-1 and "Device-2" that is the device 40-2 connected to "L2SW-2" that is the L2 switch 30-2, "Device-3" that is the device 40-3 and "Device-4" that is the device 40-4 connected to "L2SW-3" that is the L2 switch 30-3, and "Device-5" that is the device 40-5 and "Device-6" that is the device 40-6 connected to "L2SW-4" that is the L2 switch 30-4.

In addition, the detection unit 15b searches for each device including the controllers 20, the devices 40, or the like via the network devices every predetermined period. For example, the detection unit 15b searches for the controllers 20 (20-1, 20-2, 20-3) and the devices 40 (40-1, 40-2, 40-3, 40-4, 40-5, 40-6) via the L2 switches 30 (30-1, 30-2, 30-3, 30-4) every other day.

### (2-2-5-3. Setting unit 15c)

The setting unit 15c specifies a second virtual network used by a device based on the definition information, and assigns the second virtual network to a connection port of the L2 switch 30, which is the network device to which the device is connected. For example, in a case where the controller 20 that is a control device is detected as a device, the setting unit 15c assigns the second virtual network to the connection port of the L2 switch 30 to which the controller 20 is connected, and in a case where the device 40 such as a field device is detected as a device, the setting unit 15c assigns the second virtual network to the connection port of the L2 switch 30 to which the device 40 is connected. At this time, regarding the management information for managing each connection port held by the L2 switch 30 and the virtual network assigned to each connection port, the setting unit 15c changes the first virtual network associated with the connection port of the L2 switch 30 to the second virtual network as the device has been connected thereby assigning the second virtual network to the connection port of the L2 switch 30 to which the device is connected.

Describing a specific example, the setting unit 15c specifies, based on the definition information, the second virtual networks used by the devices such as {control device: "Controller-1", VLAN identification number: "VLAN10"}, {control device: "Controller-2", VLAN identification number: "VLAN20"}, {control device: "Controller-3", VLAN identification number: "VLAN30"}, {field device: "Device-1", VLAN identification number: "VLAN10"}, {field device: "Device-2", VLAN identification number: "VLAN20"}, {field device: "Device-3", VLAN identification number: "VLAN30"}, {field device: "Device-4", VLAN identification number: "VLAN10"}, {field device: "Device-5", VLAN identification number: "VLAN20"}, and {field device: "Device-6", VLAN identification number: "VLAN30"}.

In addition, the setting unit 15c changes, based on the definition information, the management information {connection port 1-1: "VLAN1", connection port 1-2: "VLAN1", connection port 1-3: "VLAN1"} held by the L2 switch 30-1 to {connection port 1-1: "VLAN10", connection port 1-2: "VLAN20", connection port 1-3: "VLAN30"}, changes the management information {connection port 2-1: "VLAN1", connection port 2-2: "VLAN1"} held by the L2 switch 30-2 to {connection port 2-1: "VLAN10", connection port 2-2: "VLAN20"}, changes the management information {connection port 3-1: "VLAN1", connection port 3-2: "VLAN1"} held by the L2 switch 30-3 to {connection port 3-1: "VLAN30", Connection port 3-2: "VLAN10"}, and changes the management information {connection port 4-1: "VLAN1", connection port 4-2: "VLAN1"} held by the L2 switch 30-4 to {connection port 4-1: "VLAN20", connection port 4-2: "VLAN30"}, thereby assigning the second virtual network to the connection ports of the L2 switches 30 to which the devices are connected.

In addition, the setting unit 15c specifies a device whose definition information has been changed among the devices detected by the search by the detection unit 15b, specifies a third virtual network used by the device based on the changed definition information, and assigns the third virtual network to the connection port of the network device to which the device is connected.

Describing a specific example, the setting unit 15c specifies that the VLAN identification number of the controller 20-1, which is a control device identified by "Controller-1", is changed from "VLAN10" to "VLAN20", and changes the management information held by the L2 switch 30-1 to which the controller 20-1 is connected from {connection port 1-1: "VLAN10"} to {connection port 1-1: "VLAN20"}, thereby assigning the third virtual network used by the controller 20-1 based on the changed definition information.

In addition, the setting unit 15c specifies the device from which the definition information has been deleted among the devices detected by the search by the detection unit 15b, and assigns the first virtual network to the connection port of the network device to which the device has been connected.

Describing a specific example, the setting unit 15c specifies that the VLAN identification number of the device 40-1 identified by "Device-1" is deleted, and changes the management information held by the L2 switch 30-2 to which the device 40-1 is connected from {connection port 2-1: "VLAN10"} to {connection port 2-1: "VLAN1"}, thereby assigning the first virtual network which is the virtual network in the initial state.

### (2-3. Configuration example and process example of controller 20)

A configuration example and a process example of the controller 20 will be described with reference to FIG. 2. For example, the controller 20 is a device that is connected to the L2 switch 30 which is a network device installed in the instrument room that manages the plant, and receives plant information transmitted by the device 40 such as a field device.

The controller 20 receives a sensor value collected by the device 40 as the plant information. In addition, the controller 20 calculates a calculation value based on the sensor value collected by the device 40, and transmits an alarm notification to the plant manager in a case where the calculated calculation value exceeds a predetermined threshold.

### (2-4. Configuration example and process example of L2 switch 30)

A configuration example and a process example of the L2 switch 30 will be described with reference to FIG. 2. For example, the L2 switch 30 is a device that is connected to the controller 20 which is a control device installed in the instrument room that manages the plant or the device 40 such as a field device installed in the plant, and executes communication of various types of information.

The L2 switch 30 receives the sensor value collected by the device 40 as the plant information and transmits the sensor value to the controller 20. In addition, the L2 switch 30 transmits the alarm notification transmitted based on the calculation value calculated by the controller 20 to the plant manager.

The L2 switch 30 has a plurality of connection ports to which the controller 20 and the device 40 are connected, and virtual networks are assigned based on management information stored in a storage unit (not illustrated).

### (2-5. Configuration example and process example of device 40)

A configuration example of the device 40 will be described with reference to FIG. 2. For example, the device 40 is a sensor device such as a temperature sensor, a pressure sensor, or a flow rate sensor that is connected to a network device installed in the plant and collects the plant information from the plant.

The device 40 collects plant information such as temperature, pressure, and flow rate in the plant. In addition, the device 40 transmits the collected plant information such as temperature, pressure, and flow rate in the plant to the controller 20.

### [3. Specific example of setting process in configurator 10]

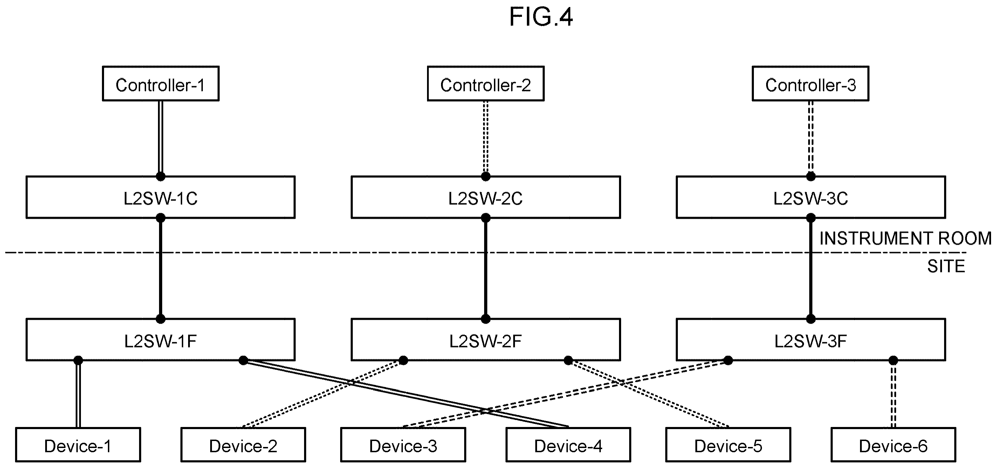

A specific example of a setting process in the configurator 10 that is the information processing apparatus according to the embodiment will be described with reference to FIGS. 4 to 9. Hereinafter, the process of setting a field network that does not use a VLAN will be described, and then a specific example of the process of setting a field network according to the embodiment will be described.

### (3-1. Process of setting field network without VLAN)

A process of setting a field network without a VLAN will be described with reference to FIG. 4. FIG. 4 is a diagram illustrating an example of the process of setting a field network without a VLAN. In the example of FIG. 4, "Controller-1" that is the controller 20-1, "Controller-2" that is the controller 20-2, and "Controller-3" that is the controller 20-3 are installed in the plant instrument room. In addition, "Device -1" that is the device 40-1, "Device-2" that is the device 40-2, "Device-3" that is the device 40-3, "Device-4" that is the device 40-4, "Device-5" that is the device 40-5, and "Device-6" that is the device 40-6 are installed at the plant site.

Here, as the network segment, it is considered to group a network segment 1 {"Controller-1", "Device-1", and "Device-4"}, a network segment 2 {"Controller-2", "Device-2", and "Device-5"}, and a network segment 3 {"Controller-3", "Device-3", and "Device-6"} is considered. In the setting process of a field network without VLAN, in order to establish the field network as described above, it is needed to physically connect the L2 switch 30 to the controller 30 and the device 40 in each network segment.

In other words, the "Controller-1" is connected to the "L2SW-1C" (on the plant instrument room side) that is a network device of the network segment 1, and the "Device-1" and the "Device-4" are connected to the "L2SW-1F" (on the plant site side). The "Controller-2" is connected to the "L2SW-2C" (on the plant instrument room side) that is a network device of the network segment 2, and the "Device-2" and the "Device-5" are connected to the "L2SW-2F" (on the plant site side). The "Controller-3" is connected to the "L2SW-3C" (on the plant instrument room side) that is a network device of the network segment 3, and the "Device-3" and the "Device-6" are connected to the "L2SW-3F" (on the plant site side).

In the above setting process, after network lines are physically connected to arbitrary connection ports, it is difficult to enable communication between a plurality of external devices virtually grouped without replacing the connections of the network lines to the connection ports. For example, in the above setting process, in a case where it is desired to change the "Controller-1" from the network segment 1 to the network segment 2, it is needed to physically reconnect the network line of the "Controller-1" to the connection port of the "L2SW-2C" from the connection port of the "L2SW-1C". Therefore, in the above setting process, in a case where a connection error of the network line occurs or in a case where it is desired to change the grouping, it is needed to change the connection of the network line to the connection port, which leads to an increase in field work and an increase in man-hours.

### (3-2. Field network setting process 1 according to embodiment)

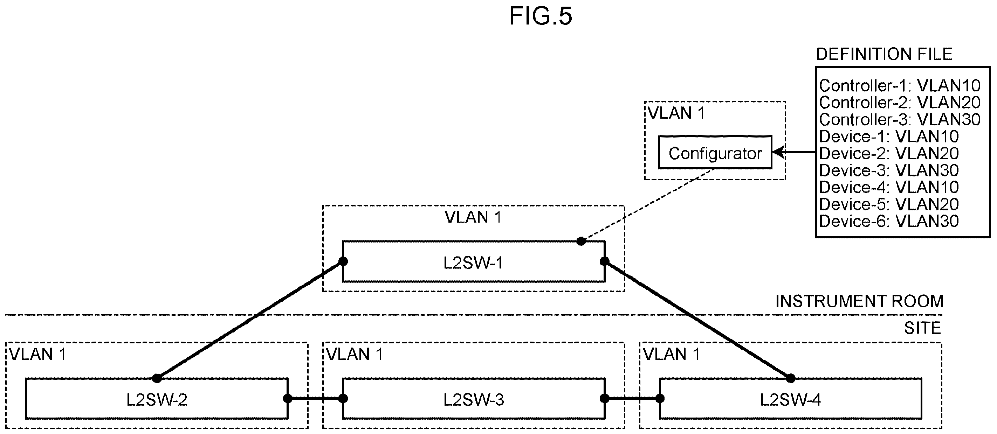

As an example of a field network setting process 1 according to the embodiment, an initial state setting process will be described with reference to FIG. 5. FIG. 5 is a diagram illustrating an example of the field network setting process 1 according to the embodiment.

The plant manager physically connects the L2 switch 30 which is a network device. In the example of FIG. 5, the plant manager physically connects the network lines to connection ports of the L2 switch 30-1 installed in the plant instrument room, the L2 switch 30-2, the L2 switch 30-3, and the L2 switch 30-4 installed in the plant site, and connects the L2 switches 30 so as to form an annular ring connection. In addition, the plant manager physically connects the configurator 10 to the connection port of the L2 switch 30-1 installed in the plant instrument room via a network line. At this time, the plant manager sets the configurator 10 and the L2 switches 30 (30-1, 30-2, 30-3, 30-4) to an initial state using a VLAN identification number "VLAN1" (the broken line) which is a management VLAN.

In the example of FIG. 5, the plant manager has a ring connection in order to secure the reliability of the network, but a star connection or a daisy chain connection may be used, and the network topology is not limited.

In addition, the plant manager inputs the definition file to the configurator 10. In the example of FIG. 5, the plant manager inputs, to the configurator 10, definition files including definition information such as "Controller-1: VLAN10", "Controller-2: VLAN20", "Controller-3: VLAN30", "Device-1: VLAN10", "Device-2: VLAN20", "Device-3: VLAN30", "Device-4: VLAN10", "Device-5: VLAN20", "Device-6: VLAN30",... as a combination of each device and identification information of the virtual network used by each device.

By executing the field network setting process 1 described above, the VLAN of the network segment used for control can be set to trunk ports of all the L2 switches 30.

### (3-3. Field network setting process 2 according to embodiment)

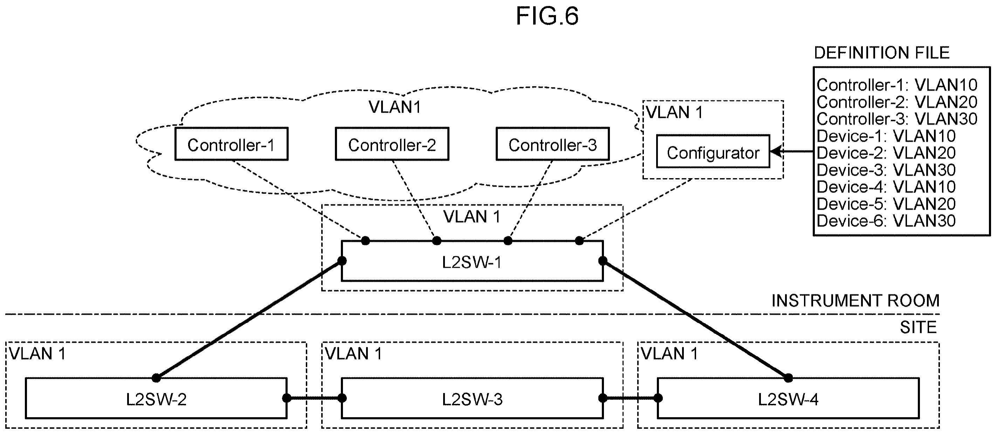

As an example of a field network setting process 2 according to the embodiment, a field network controller physical connection setting process will be described with reference to FIG. 6. FIG. 6 is a diagram illustrating an example of the field network setting process 2 according to the embodiment.

The plant manager physically connects the controller 20, which is a control device, to the L2 switch 30. In the example of FIG. 6, the plant manager physically connects the network lines of "Controller-1", "Controller-2" and "Controller-3" to different connection ports of the L2 switch 30-1 installed in the plant instrument room. At this time, the plant manager sets the controllers 20 (20-1, 20-2, 20-3) to the initial state using the VLAN identification number "VLAN1" (the broken lines) which is a management VLAN.

By executing the field network setting process 2 described above, the controllers 20 (20-1, 20-2, 20-3) and the L2 switch 30-1 in the instrument room can be physically connected by the network lines to set an initial setting VLAN (default VLAN).

### (3-4. Field network setting process 3 according to embodiment)

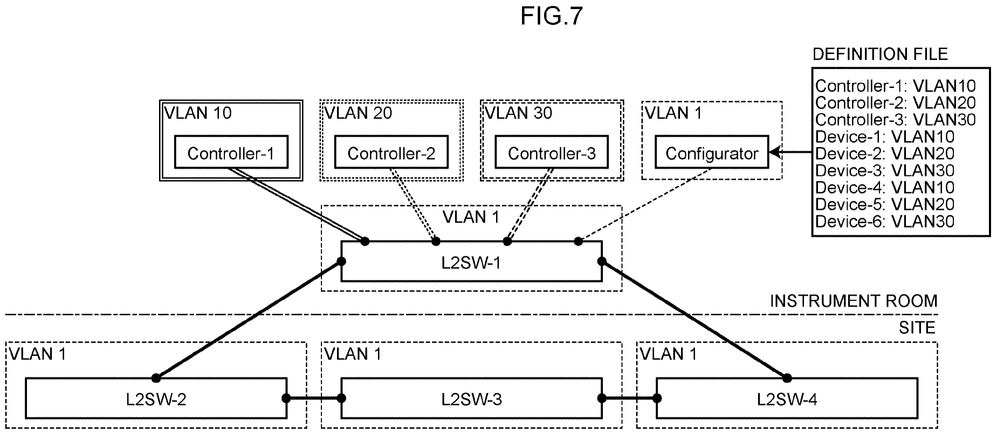

As an example of a field network setting process 3 according to the embodiment, a setting process of setting a controller VLAN of the field network will be described with reference to FIG. 7. FIG. 7 is a diagram illustrating an example of the field network setting process 3 according to the embodiment.

The configurator 10 detects the controllers 20 connected to the L2 switch 30 and sets a port VLAN according to the definition file. In the example of FIG. 7, the configurator 10 refers to the definition file, sets the port VLAN of "Controller-1" to "VLAN10" (the double solid line), sets the port VLAN of "Controller-2" to "VLAN20" (the double dotted line), and sets the port VLAN of "Controller-3" to "VLAN30" (the double broken line). At this time, the configurator 10 changes the VLAN identification number "VLAN1" of "Controller-1" to "VLAN10", changes the VLAN identification number "VLAN1" of "Controller-2" to "VLAN20", and changes the VLAN identification number "VLAN1" of "Controller-3" to "VLAN30", thereby setting the port VLAN of the controller 20.

By executing the field network setting process 3 described above, it is possible to set a VLAN (defined VLAN) defined so as to allocate the controller 20-1 to different network segments of the "VLAN10" (VLAN_ID = 10), the controller 20-2 to the "VLAN20" (VLAN_ID = 20), and the controller 20-3 to the "VLAN30" (VLAN_ID = 30) from the default VLAN.

Here, the configurator 10 sets a connection port to which no network line is physically connected to "VLAN1" (VLAN_ID = 1), which is a default VLAN, so as not to be connected to a network segment that has already been set. Then, in a case where a network line is physically connected to the connection port, the configurator 10 displays "A new device has been detected" by the network search process, and sets a VLAN identification number of the detected new device 40, so that network segments can be divided.

In other words, the configurator 10 sets the network segments identified by "VLAN10", "VLAN20", and "VLAN30" for the VLAN of the controller 20, but does not initially set the VLAN of the device 40 such as the field device connected to the controller 20 as the "VLAN1" in any network segment, and in a case where a new device 40 is found by the network search process, sets "VLAN10", "VLAN20", or "VLAN30" for the new device 40, and executes the segment setting that is the logical connection.

### (3-5. Field network setting process 4 according to embodiment)

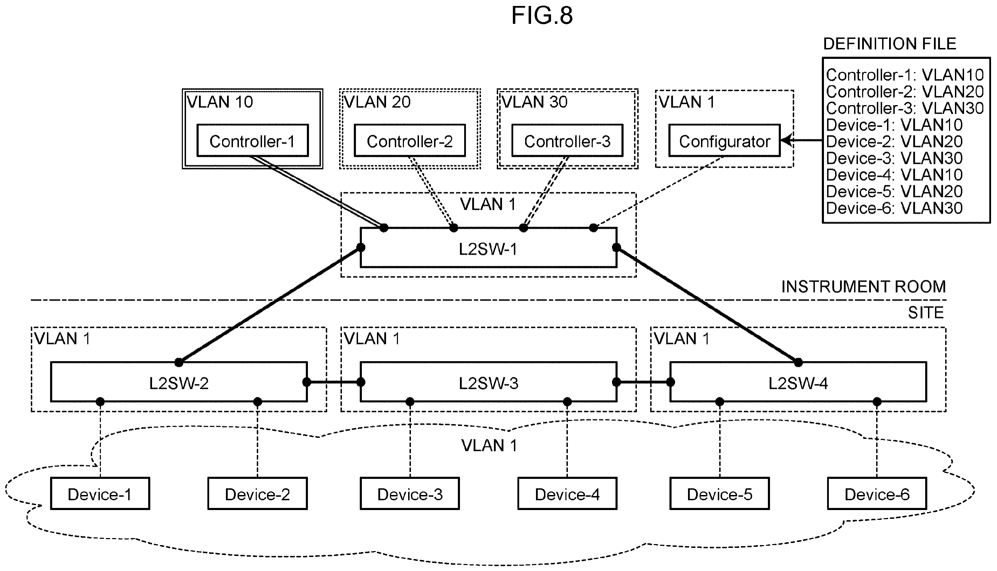

As an example of a field network setting process 4 according to the embodiment, a field network device physical connection setting process will be described with reference to FIG. 8. FIG. 8 is a diagram illustrating an example of the field network setting process 4 according to the embodiment.

The plant manager physically connects the device 40 such as a field device to the L2 switch 30. In the example of FIG. 8, the plant manager physically connects the network lines of "Device-1" and "Device-2" to different connection ports of the L2 switch 30-2 installed in the plant site, physically connects the network lines of "Device-3" and "Device-4" to different connection ports of the L2 switch 30-3 installed in the plant site, and physically connects the network lines of "Device-5" and "Device-6" to different connection ports of the L2 switch 30-4 installed in the plant site. At this time, the plant manager sets the devices 40 (40-1, 40-2, 40-3, 40-4, 40-5, 40-6) to the initial state using the VLAN identification number "VLAN1" (the broken lines) which is a management VLAN.

By executing the field network setting process 4 described above, the devices 40 (40-1, 40-2, 40-3, 40-4, 40-5, 40-6) and the L2 switches 30 (30-2, 30-3, 30-4) in the plant can be physically connected by the network lines to set the initially set VLAN (default VLAN).

### (3-6. Field network setting process 5 according to embodiment)

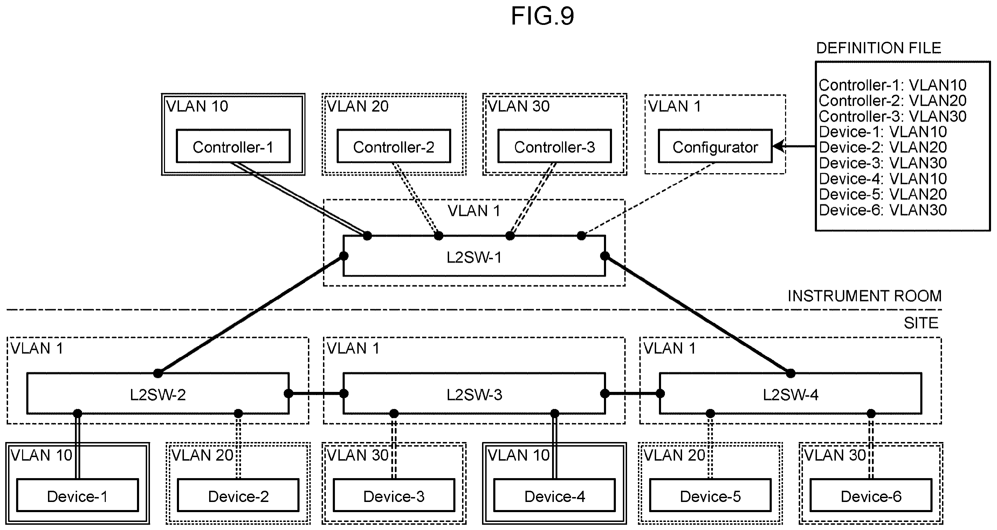

As an example of a field network setting process 5 according to the embodiment, a process of setting the device VLAN setting of the field network will be described with reference to FIG. 9. FIG. 5 is a diagram illustrating an example of a field network setting process 5 according to the embodiment.

The configurator 10 detects the devices 40 connected to the L2 switches 30 and sets the port VLAN according to the definition file. In the example of FIG. 9, the configurator 10 refers to the definition file, sets the port VLAN of "Device-1" to "VLAN10" (the double solid line), sets the port VLAN of "Device-2" to "VLAN20" (the double dotted line), sets the port VLAN of "Device-3" to "VLAN30" (the double dashed line), sets the port VLAN of "Device-4" to "VLAN10" (the double solid line), sets the port VLAN of "Device-5" to "VLAN20" (the double dotted line), and sets the port VLAN of "Device-6" to "VLAN30" (the double dashed line). At this time, the configurator 10 changes the VLAN identification number "VLAN1" of "Device-1" to "VLAN10", changes the VLAN identification number "VLAN1" of "Device-2" to "VLAN20", changes the VLAN identification number "VLAN1" of "Device-3" to "VLAN30", changes the VLAN identification number "VLAN1" of "Device-4" to "VLAN10", changes the VLAN identification number "VLAN1" of "Device-5" to "VLAN20", and changes the VLAN identification number "VLAN1" of "Device-6" to "VLAN30", thereby setting the port VLAN of the device 40.

By executing the field network setting process 5 described above, it is possible to set a VLAN (defined VLAN) defined to allocate the controller 20-1, the device 40-1, and the device 40-4 to the network segment 1 of the "VLAN10" (VLAN_ID = 10), the controller 20-2, the device 40-2, and the device 40-5 to the network segment 2 of the "VLAN20" (VLAN_ID = 20), and the controller 20-3, the device 40-3, and the device 40-6 to the network segment 3 of the "VLAN30" (VLAN_ID = 30).

### [4. Flow of process in information processing system 100]

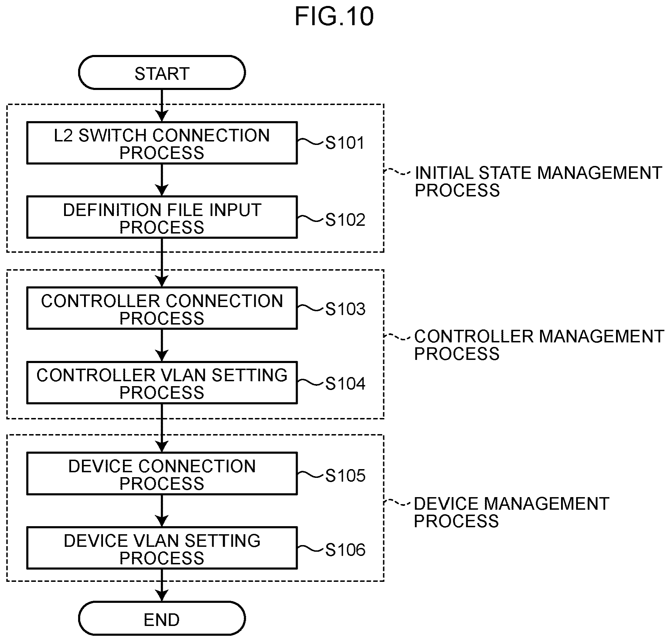

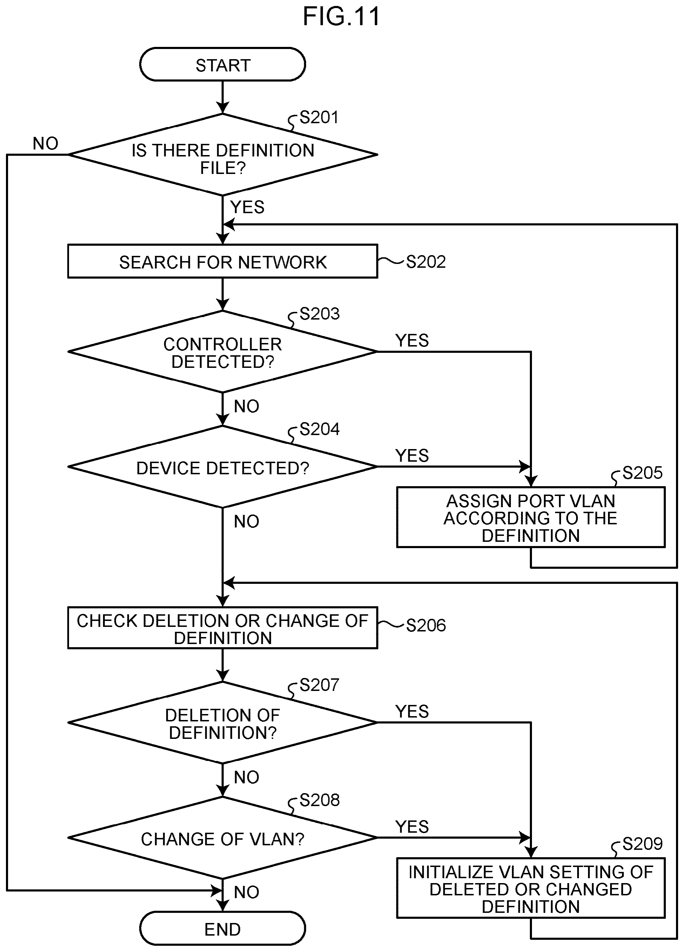

A flow of a process in the information processing system 100 according to the embodiment will be described with reference to FIGS. 10 and 11. Hereinafter, a field network establishment process and a VLAN setting process will be described in this order.

### (4-1. Field network establishment process)

A flow of the field network establishment process according to the embodiment will be described with reference to FIG. 10. FIG. 10 is a flowchart illustrating an example of the flow of the field network establishment process according to the embodiment. Hereinafter, an initial state management process, a controller management process, and a device management process will be described in this order. Note that the process in steps S101 to S106 below can be executed in a different order. In addition, some steps in the following steps S101 to S106 may be omitted. For example, the device management process in the following steps S105 to S106 may be executed before the controller management process in the following steps S103 to S104.

### (4-1-1. Initial state management process)

First, the initial state management process will be described. First, the plant manager executes an L2 switch connection process (step S101). For example, the plant manager physically connects the plurality of L2 switches 30 with network lines, thereby building an annular ring connection of the L2 switches 30. At this time, the plant manager physically connects the configurator 10 and the L2 switches 30 via the network lines, and sets an initial setting VLAN that can be managed by the configurator 10. Next, the plant manager executes definition file input process (step S102). For example, the plant manager inputs, to the configurator 10, a definition file including definition information that is a combination of a device such as the controller 20 or the device 40 and a VLAN identification number.

### (4-1-2. Controller management process)

Second, the controller management process will be described. First, the plant manager executes the controller connection process (step S103). For example, the plant manager builds the controller connection by physically connecting the plurality of controllers 20 to the connection ports of any L2 switches 30 via the network lines. At this time, the plant manager sets the initial setting VLAN so that the configurator 10 can manage the controllers 20. Next, the configurator 10 executes a controller VLAN setting process (step S104). For example, the configurator 10 refers to the definition file and sets the controllers 20 with defined VLAN identification numbers.

### (4-1-3. Device management process)

Third, the device management process will be described. First, the plant manager executes a device connection process (step S105). For example, the plant manager builds a device connection by physically connecting the plurality of devices 40 to connection ports of any L2 switches 30 via the network lines. At this time, the plant manager sets the initial setting VLAN so that the configurator 10 can manage the devices 40. Next, the configurator 10 executes a device VLAN setting process (step S106). For example, the configurator 10 refers to the definition file and sets the devices 40 with the defined VLAN identification numbers.

### (4-2. VLAN setting process)

The flow of the VLAN setting process according to the embodiment will be described with reference to FIG. 11. FIG. 11 is a flowchart illustrating an example of a flow of the VLAN setting process according to the embodiment. Note that the process in steps S201 to S209 below can be executed in a different order. In addition, some steps in the following steps S201 to S209 may be omitted.

### (4-2-1. Definition file check process)

First, a definition file check process will be described. The configurator 10 refers to the definition file in the storage unit 14, and checks the presence or absence of the definition file (step S201). At this time, in a case where there is a definition file (step S201: Yes), the configurator 10 proceeds to the process of step S202. On the other hand, in a case where there is no definition file (step S201: No), the configurator 10 ends the VLAN setting process.

### (4-2-2. VLAN setting process)

Secondly, a VLAN setting process will be described. First, the configurator 10 searches for a network via the L2 switches 30 (step S202). At this time, in a case of detecting the controllers 20 (step S203: Yes) or detecting the devices 40 (step S204: Yes), the configurator 10 proceeds to the process of step S205. Then, the configurator 10 assigns the port VLAN according to the definition information in the definition file to the detected controllers 20 or devices 40 (step S205), and returns to the process of step S202. On the other hand, in a case of not detecting any controllers 20 (step S203: No) nor any devices 40 (step S204: No), the configurator 10 proceeds to step S206.

### (4-2-3. VLAN setting initialization process)

Thirdly, a VLAN setting initialization process will be described. First, the configurator 10 refers to the definition file in the storage unit 14, and checks deletion or change in the definition information (step S206). At this time, in a case of detecting a deletion of the definition information (step S207: Yes) or in a case of detecting a change in the VLAN of the definition information (step S208: Yes), the configurator 10 proceeds to the process of step S209. Then, the configurator 10 initializes the controllers 20 or the devices 40 in which the definition information has been deleted or the VLAN of the definition information has been changed by setting the same as the initial setting VLAN (step S209), and returns to the process of step S206. On the other hand, in a case of not detecting a deletion of the definition information (step S207: No) nor a change of the VLAN of the definition information (step S208: No), the configurator 10 ends the VLAN setting process.

### [5. Effects of embodiment]

Finally, effects of the embodiment will be described. Hereinafter, effects 1 to 7 corresponding to the process according to the embodiment will be described.

### (5-1. Effect 1)

First, in the process according to the above-described embodiment, the configurator 10 stores the definition information in which each device is associated with information regarding a virtual network used by each device, detects that the device is connected to the L2 switch 30 connected to the configurator 10 using a default VLAN via the default VLAN, specifies the VLAN used by the device based on the definition information, and sets the defined VLAN in the connection port of the L2 switch 30 to which the device is connected. Therefore, with the process, the network can be effectively established.

### (5-2. Effect 2)

Second, in the process according to the above-described embodiment, the configurator 10 assigns the defined VLAN to the connection ports of the L2 switches 30 to which the devices are connected by changing the default VLAN associated with the connection ports of the L2 switches 30 as the devices are connected to the defined VLAN in the management information for managing each connection ports held by the L2 switches 30 and the virtual network set in each connection port. Therefore, with the process, a network can be effectively established by setting a VLAN via the L2 switches 30.

### (5-3. Effect 3)

Third, in the process according to the above-described embodiment, the configurator 10 stores definition information in which information regarding VLANs used by the respective devices including the controllers 20 and the devices 40 is associated, detects at least one device among the controllers 20 and the devices 40 by using a default VLAN set as a virtual network in an initial state, assigns a defined VLAN to a connection port of the L2 switch 30 to which the controller 20 is connected in a case where the controller 20 is detected, and assigns a defined VLAN to a connection port of the L2 switch 30 to which the device 40 is connected in a case where the device 40 is detected. Therefore, with the process, a network including the controllers 20 and the devices 40 can be effectively established.

### (5-4. Effect 4)

Fourth, in the process according to the above-described embodiment, the configurator 10 stores, as the definition information, VLAN identification numbers for identifying network segments to which the controllers 20 and the devices 40 controlled by the controllers 20 are allocated. Therefore, with the process, a network with grouped network segments can be effectively established.

### (5-5. Effect 5)

Fifth, in the process according to the above-described embodiment, the configurator 10 searches for each device via the L2 switches 30 every predetermined period, specifies a device whose definition information has been changed among the detected devices, specifies a changed VLAN used by the device based on the changed definition information, and assigns the changed VLAN to the connection port of the L2 switch 30 to which the device is connected. Therefore, with the process, a network can be effectively established by automatically assigning a VLAN to a device on the network whose setting has been changed.

### (5-6. Effect 6)

Sixth, in the process according to the above-described embodiment, the configurator 10 searches for each device via the L2 switches 30 every predetermined period, specifies a device from which the definition information is deleted among the detected devices, and assigns the default VLAN to the connection port of the network device to which the device is connected. Therefore, in this process, a network can be effectively established by automatically assigning a VLAN to a device on the network whose setting has been deleted.

### (5-7. Effect 7)

Seventh, in the process according to the above-described embodiment, the devices 40 are devices that are connected to the L2 switches 30 installed in the plant and collect plant information from the plant, and the controllers 20 are devices that are connected to the L2 switches 30 installed in the instrument room that manages the plant and receive the plant information transmitted by the devices 40. Therefore, with the process, a network can be effectively established in the plant.

### [System]

The process procedure, the control procedure, the specific name, and the information including various data and parameters illustrated in the document and the drawings can be arbitrarily changed unless otherwise specified.

In addition, each component of each device illustrated in the drawings is functionally conceptual, and is not necessarily physically configured as illustrated in the drawings. In other words, specific forms of distribution and integration of the devices are not limited to those illustrated in the drawings. In other words, all or a part thereof can be functionally or physically distributed and integrated in an arbitrary unit according to various loads, usage conditions, and the like.

Furthermore, all or an arbitrary part of each processing function performed in each device can be realized by a CPU and a program analyzed and executed by the CPU, or can be realized as hardware by wired logic.

### [Hardware]

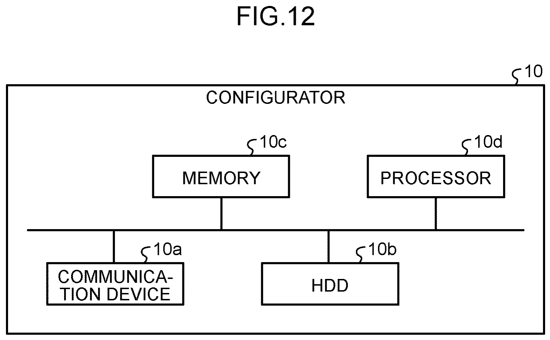

Next, a hardware configuration example of the configurator 10 which is an information processing apparatus will be described. Note that other devices can have a similar hardware configuration. FIG. 12 is a diagram illustrating the hardware configuration example according to the embodiment. As illustrated in FIG. 12, the configurator 10 includes a communication device 10a, a hard disk drive (HDD) 10b, a memory 10c, and a processor 10d. The units illustrated in FIG. 12 are connected to each other by a bus or the like.

The communication device 10a is a network interface card or the like, and communicates with another server. The HDD 10b stores programs and databases for operating the functions illustrated in FIG. 2.

The processor 10d reads a program, from the HDD 10b or the like, for executing a process similar to that of the processing units illustrated in FIG. 2 and develops the program in the memory 10c, thereby operating the process for executing the functions described with reference to FIG. 2 and the like. For example, this process executes a function similar to that of each processing unit included in the configurator 10. Specifically, the processor 10d reads a program having functions similar to those of the acquisition unit 15a, the detection unit 15b, the setting unit 15c, and the like from the HDD 10b or the like. Then, the processor 10d executes a process of executing processes similar to those of the acquisition unit 15a, the detection unit 15b, the setting unit 15c, and the like.

As described above, the configurator 10 operates as a device that executes various processing methods by reading and executing a program. Further, the configurator 10 can also implement functions similar to those of the above-described embodiment by reading the program from the recording medium by the medium reading device and executing the read program. Note that other programs according to the embodiment are not limited to be executed by the configurator 10. For example, the present invention can be similarly applied to a case where another computer or server executes the program or a case where the another computer or server execute the program in cooperation.

The program can be distributed via a network such as the Internet. In addition, the program is recorded on a computer-readable recording medium such as a hard disk, a flexible disk (FD), a CD-ROM, a magneto-optical disk (MO), or a digital versatile disc (DVD), and can be executed by being read from the recording medium by the computer.

### [Others]

Some examples of combinations of the disclosed technical features are described below.
(1) An information processing apparatus including a storage unit that stores definition information in which respective equipment is associated with information on a virtual network used by the respective equipment, a detection unit that detects, via a first virtual network, that equipment is connected to a network device connected to the information processing apparatus by using the first virtual network, and a setting unit that specifies a second virtual network used by the equipment based on the definition information and assigns the second virtual network to a connection port of the network device to which the equipment is connected.
(2) The information processing apparatus according to (1), wherein the setting unit assigns the second virtual network to the connection port of the network device to which the equipment is connected by changing, to the second virtual network, the first virtual network associated with the connection port of the network device when the equipment is connected, in management information for managing each connection port held by the network device and the virtual network assigned to the each connection port.
(3) The information processing apparatus according to (1) or (2), wherein the storage unit stores the definition information that associates information on the virtual network used by the respective equipment including a control device and a device, the detection unit is a detection unit that detects at least one of the control device and the device by using the first virtual network assigned as a virtual network in an initial state, and the setting unit assigns the second virtual network to a connection port of the network device to which the control device is connected in a case where the control device is detected as the equipment, and assigns the second virtual network to a connection port of the network device to which the device is connected in a case where the device is detected as the equipment.
(4) The information processing apparatus according to (3), wherein the storage unit stores, as the definition information, an identification number of a virtual network that identifies a network segment to which the control device and the device controlled by the control device are assigned.
(5) The information processing apparatus according to any one of (1) to (4), wherein the detection unit searches for the respective equipment via the network device every predetermined period, and the setting unit specifies the equipment whose definition information has been changed among the respective equipment detected by the search, specifies a third virtual network used by the equipment based on the changed definition information, and assigns the third virtual network to a connection port of the network device to which the equipment is connected.
(6) The information processing apparatus according to any one of (1) to (5), wherein the detection unit searches for the respective equipment via the network device every predetermined period, and the setting unit specifies the equipment from which the definition information has been deleted among the respective equipment detected by the search, and assigns the first virtual network to a connection port of the network device to which the equipment is connected.
(7) The information processing apparatus according to any one of (3) to (6), wherein the device is equipment that is connected to the network device installed in a plant and collects plant information from the plant, the control device is equipment that is connected to the network device installed in an instrument room that manages the plant and receives the plant information transmitted by the device.
(8) An information processing method that an information processing apparatus executes a process including detecting, via a first virtual network, that equipment is connected to a network device connected to the information processing apparatus by using the first virtual network, specifying a second virtual network used by the equipment connected to the network device based on definition information in which respective equipment is associated with information on a virtual network used by the respective equipment, and assigning the second virtual network to a connection port of the network device to which the equipment is connected.
(9) An information processing program configured to cause an information processing apparatus to execute a process including detecting, via a first virtual network, that equipment is connected to a network device connected to the information processing apparatus by using the first virtual network, specifying a second virtual network used by the equipment connected to the network device based on definition information in which respective equipment is associated with information on a virtual network used by the respective equipment, and assigning the second virtual network to a connection port of the network device to which the equipment is connected.

### Reference Signs List

- 10: CONFIGURATOR
- 11: INPUT UNIT
- 12: OUTPUT UNIT
- 13: COMMUNICATION UNIT
- 14: STORAGE UNIT
- 14a: DEFINITION FILE STORAGE UNIT
- 15: CONTROL UNIT
- 15a: ACQUISITION UNIT
- 15b: DETECTION UNIT
- 15c: SETTING UNIT
- 20: CONTROLLER
- 30: L2 SWITCH
- 40: DEVICE
- 100: INFORMATION PROCESSING SYSTEM

## Claims

1. An information processing apparatus comprising:
a storage unit that stores definition information in which respective equipment is associated with information on a virtual network used by the respective equipment;
a detection unit that detects, via a first virtual network, that equipment is connected to a network device connected to the information processing apparatus by using the first virtual network; and
a setting unit that specifies a second virtual network used by the equipment based on the definition information and assigns the second virtual network to a connection port of the network device to which the equipment is connected.

2. The information processing apparatus according to claim 1, wherein
the setting unit
assigns the second virtual network to the connection port of the network device to which the equipment is connected by changing, to the second virtual network, the first virtual network associated with the connection port of the network device when the equipment is connected, in management information for managing each connection port held by the network device and the virtual network assigned to the each connection port.

3. The information processing apparatus according to claim 1, wherein
the storage unit
stores the definition information that associates information on the virtual network used by the respective equipment including a control device and a device,
the detection unit
is a detection unit that detects at least one of the control device and the device by using the first virtual network assigned as a virtual network in an initial state, and
the setting unit
assigns the second virtual network to a connection port of the network device to which the control device is connected in a case where the control device is detected as the equipment, and
assigns the second virtual network to a connection port of the network device to which the device is connected in a case where the device is detected as the equipment.

4. The information processing apparatus according to claim 3, wherein
the storage unit
stores, as the definition information, an identification number of a virtual network that identifies a network segment to which the control device and the device controlled by the control device are assigned.

5. The information processing apparatus according to claim 1, wherein
the detection unit
searches for the respective equipment via the network device every predetermined period, and
the setting unit
specifies the equipment whose definition information has been changed among the respective equipment detected by the search, specifies a third virtual network used by the equipment based on the changed definition information, and assigns the third virtual network to a connection port of the network device to which the equipment is connected.

6. The information processing apparatus according to claim 1, wherein
the detection unit
searches for the respective equipment via the network device every predetermined period, and
the setting unit
specifies the equipment from which the definition information has been deleted among the respective equipment detected by the search, and assigns the first virtual network to a connection port of the network device to which the equipment is connected.

7. The information processing apparatus according to claim 3, wherein
the device is
equipment that is connected to the network device installed in a plant and collects plant information from the plant,
the control device is
equipment that is connected to the network device installed in an instrument room that manages the plant and receives the plant information transmitted by the device.

8. An information processing method that an information processing apparatus executes a process comprising:
detecting, via a first virtual network, that equipment is connected to a network device connected to the information processing apparatus by using the first virtual network;
specifying a second virtual network used by the equipment connected to the network device based on definition information in which respective equipment is associated with information on a virtual network used by the respective equipment; and
assigning the second virtual network to a connection port of the network device to which the equipment is connected.

9. An information processing program configured to cause an information processing apparatus to execute a process comprising:
detecting, via a first virtual network, that equipment is connected to a network device connected to the information processing apparatus by using the first virtual network;
specifying a second virtual network used by the equipment connected to the network device based on definition information in which respective equipment is associated with information on a virtual network used by the respective equipment; and
assigning the second virtual network to a connection port of the network device to which the equipment is connected.
